(19) Europäisches Patentamt
European Patent Office
Office européen des brevets

(11) Numéro de publication: **0 032 076**
**B1**

# (12) FASCICULE DE BREVET EUROPEEN

(45) Date de publication du fascicule du brevet: **12.06.85**

(51) Int. Cl.⁴: **C 08 L 21/00**, C 08 K 5/00

(21) Numéro de dépôt: **80401751.5**

(22) Date de dépôt: **08.12.80**

(54) **Procédé pour améliorer la compatibilité des huiles et des charges dans des compositions de caoutchouc.**

(30) Priorité: **20.12.79 FR 7931219**

(43) Date de publication de la demande: **15.07.81 Bulletin 81/28**

(45) Mention de la délivrance du brevet: **12.06.85 Bulletin 85/24**

(84) Etats contractants désignés: **AT BE DE FR GB IT LU NL**

(56) Documents cités:
**EP - A - 0 034 970**
**FR - A - 2 273 014**
**FR - A - 2 307 845**
**GB - A - 916 091**
**US - A - 3 306 907**

**Gummi Werkstoffe, K. NAGDI, Vogel Verlag, Würzburg, 1981, pages 57-58**

(73) Titulaire: **RHONE-POULENC CHIMIE DE BASE, 25, quai Paul Doumer, F-92408 Courbevoie (FR)**

(72) Inventeur: **Machurat, Jean, 8, rue Descartes, F-69250 Neuville/S/Saône (FR)**
Inventeur: **Morawski, Jean-Claude, 10, rue des Primevères, F-69680 Chassieu (FR)**
Inventeur: **Soula, Gérard, 33, rue Nungesser, F-69330 Meyzieu (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

EP 0 032 076 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet un procédé pour améliorer la compatibilité des huiles avec les charges dans les élastomères afin d'augmenter les performances des articles manufacturés, et de faciliter leur élaboration.

On sait que les huiles sont un constituant important, d'environ 1 à 100 parties en poids pour 100 parties d'élastomères, des formules destinées à la production des pièces techniques et des pneumatiques.

Mais il apparaît nécessaire d'améliorer la compatibilité des plastifiants vis-à-vis des charges minérales et en particulier à base de silice en raison du caractère généralement lipophile des huiles de hydrophile des silices, ce qui conduit à une affinité réciproque médiocre.

Or maintenant on a trouvé, et c'est ce qui fait l'objet de la présente invention que cette compatibilité pouvait être améliorée de manière spectaculaire en mettant en œuvre des additifs à base d'alcényl-succinimides obtenus par condensation d'une polyamine sur un anhydride alcényl-succinique dont le radical alcényle contient de 3 à 100 atomes de carbone, de préférence de 3 à 80 atomes de carbone.

Parmi les polyamines pouvant être utilisées pour obtenir les alcényl-succinimides on peut citer:

I) les polyalkylène amines dont les radicaux alkylènes sont linéaires ou ramifiés et contiennent de 2 à 12 atomes de carbone, lesdites polyalkylène amines étant éventuellement substituées sur l'azote par un ou des radicaux hydroxyalcoyles ou aminoalcoyles.

II) les polyphénylène amines.

III) les polyoxaalkylène amines dont les radicaux oxaalkylènes sont linéaires ou ramifiés et contiennent de 2 à 3 atomes de carbone.

IV) les amines tertiaires aminoalcoylées répondant à la formule générale:

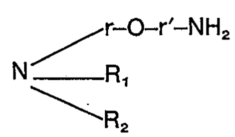

où

r représente un radical éthylène ou propylène

r′ représente un radical triméthylène ou propylène

$R_1$ représente un radical
$-r-O-r'-NH_2$ ou $-r'-NH_2$

$R_2$ représente un radical
$-r-O-r'-NH_2$ ou $-r'-NH_2$, –alcoyle en $C_2$–$C_4$ ou phényle.

I) Comme exemples de polyalkylène amines non substituées on peut citer:

– les méthylène amines telles que triméthylène diamine, tétraméthylène diamine, pentaméthylène diamine, hexaméthylène diamine, heptaméthylène diamine, octaméthylène diamine, nonaméthylène diamine, décaméthylène diamine, di(triméthylène)triamine, di(hexaméthylène)triamine;

– les éthylène amines telles que éthylène diamine, diéthylène triamine, triéthylène tétramine, tétraéthylène pentamine, pentaéthylène hexamine;

– les propylène amines telles que la propylène diamine, la dipropylène triamine, la tripropylène tétramine;

– leurs homologues cycliques du type aminoalcoylpipérazines telles que 1,4 bis(2-aminoéthyl)pipérazine, 1,4 bis(4-aminobutyl)pipérazine.

Les éthylène polyamines sont spécialement utiles. Elles sont décrites d'une manière assez détaillée sous le titre «Diamines and Higher Amines» dans «Encyclopedia of Chemical Technology», 2ème édition, Kirk et Othmer, Volume 7, pages 27–39, Interscience Publishers, New York (1965). Elles peuvent être utilisées seules ou en mélange entre elles ou avec leurs homologues cycliques.

Comme exemples de polyalkylène amines substituées sur l'azote par un ou des groupes hydroxyalcoyles, on peut citer celles dont le ou les groupes hydroxyalcoyles contiennent moins de 8 atomes de carbone telles que: N-(2-hydroxyéthyl)-éthylène diamine, N,N-bis(2-hydroxyéthyl)éthylène diamine, mono-hydroxypropyldiéthylène triamine, di-hydroxypropyltétraéthylène pentamine, N-(3-hydroxypropyl)tétraméthylène diamine.

Comme exemples de polyalkylène amines substituées sur l'azote par un ou des groupes aminoalcoyles, on peut citer celles dont le ou les groupes aminoalcoyles contiennent moins de 4 atomes de carbone telles que: la tris(2-aminoéthyl)amine, les N(2-aminoéthyl)tétraéthylène pentamine, la N,N,N′ tris(3-aminopropyl)éthylène diamine, la N,N,N,N′tétrakis(3-aminopropyl)éthylène diamine, la N(3-aminoéthyl)triméthylène diamine.

II) Comme exemples de polyphénylène amines on peut citer:
– les phénylène diamines
– le bis(aminophényl)2-2 propane.

III) Comme exemples de polyoxaalkylènes amines on peut citer:
– le diamino-1,10 dioxa-4,7 décane
– le diamino-1,13 trioxa 4,7,10 tridécane
– le diamino-1,8 dioxa-3,6 triméthyl 1,5,8 octane
– le tris(amino-2 méthyl-2 éthoxy)-1,2,3 propane.

D'autres exemples de polyoxaalkylène amines pouvant être utilisées sont décrits dans le brevet français N° 1 547 228.

IV) Comme exemples d'amines tertiaires aminoalcoylées pouvant être utilisées, on peut citer celles décrites dans le brevet français N° 75.39690 publié sous le N° 2 307 795, en en particulier:
– la tris(oxa-3 amino-6 hexyl)amine
– la N éthyl bis (oxa-3 amino-6 hexyl)amine.

Parmi les anhydrides alcénylsucciniques pouvant être mis en œuvre pour préparer les alcénylsuccinimides, on peut citer ceux dont le radical alcényle dérive d'une monooléfine en $C_3$–$C_{30}$, d'un oligomère ou d'un polymère d'une monooléfine en $C_2$–$C_{30}$ ou d'un copolymère desdites oléfines

entre elles ou avec des comonomères diéniques ou vinylaromatiques. On peut citer de préférence les anhydrides alcénylsucciniques dérivés d'oligomères ou de polymères de l'éthylène, du propylène, du butène 1, de l'isobutène, du cyclohexyl-3 butène-1, du méthyl-2 propyl-5 hexène-1.

Les anhydrides alcénylsuccinimiques peuvent être préparés d'une manière connue par condensation de l'anhydride maléique sur une oléfine, un oligomère, un polymère ou un copolymère de ladite oléfine; cette opération peut être réalisée par voie thermique (brevet américain N° 3 306 907) ou bien en présence de chlore (brevet américain N° 3 231 587) ou de brome (brevet français N° 74.18915 publié sous le N° 2 273 014); cette opération peut être aussi réalisée au départ de polyoléfines monochlorées ou monobromées tel que cela est signalé dans le brevet français publié sous le N° 2 042 558.

L'opération de condensation de l'anhydride alcénylsucciniques sur la polyamine mise en œuvre pour préparer l'alcénylsuccinimide est réalisée d'une manière connue à une température comprise entre 80 et 250 °C (brevets US N° 3 172 892, N° 3 219 666, français publié sous le N° 2 307 845.

Cette opération est réalisée de préférence à une température comprise entre 120 et 240 °C, tout particulièrement entre 130 et 230 °C, avec un rapport molaire polyamine/anhydride alcénylsuccinimique inférieur à 1.

Lorsque l'amine mise en œuvre contient deux groupements amino primaire, un rapport molaire compris entre 0,4 et 0,6 permettra d'obtenir des compositions comportant une majeure partie de bis alcényl succinimides; un rapport molaire voisin de 1 de préférence compris entre 0,7 et 0,95, permettra d'obtenir des compositions contenant une majeure partie de monoalcényl succinimides. Lorsque l'amine contient 3 groupements amino primaires, un rapport molaire compris entre 0,2 et 0,4 permettra d'obtenir un tris succinimide. Lorsque l'amine contient 4 groupements amino primaires, un rapport molaire compris entre 0,15 et 0,3 permettra d'obtenir un tétrakis-succinimide.

L'huile selon l'invention est constituée par une huile à base d'hydrocarbures aromatiques naphténiques ou paraffiniques extraits de certaines fractions du pétrole.

La matière additionnée de charge est constituée par un matériau élastomérique, tel que caoutchouc naturel, SBR, nitrile, polychloroprène, EPDM.

On sait que dans les matériaux élastomériques tels que les copolymères de styrène butadiène (SBR), caoutchoucs naturels, on ajoute généralement de 1 à 60 parties en poids d'huile pour 100 parties d'élastomères.

Selon l'invention, il suffit de quelques pour cent, en particulier de 1 à 5% en poids d'additif à base d'alcémyl-succinimide par rapport à l'huile pour obtenir des résultats significatifs.

La charge selon l'invention est notamment constituée par une charge minérale, naturelle ou synthétique.

Parmi celles-ci, on peut citer de manière non limitative les charges à base de carbonate de calcium, le kaolin, les silices, les silico-aluminates.

Plus particulièrement la présente invention s'adresse aux silices synthétiques et notamment aux silices précipitées.

Celles-ci peuvent être obtenues par diverses familles de procédés.

Selon une première famille on ajoute un agent d'acidification, tel que de l'anhydride carbonique ou un acide minéral, à une solution aqueuse de silicate, l'on fait un arrêt après l'apparition de l'opalescence et l'on observe un temps de mûrissement avant de reprendre l'acidification du milieu, comme par exemple, dans les procédés décrits dans le FR 2 208 950 ou l'US 3 503 797.

Selon une seconde famille on réalise la première interruption d'acide au delà du point d'opalescence, entre l'opalescence et le gel, comme dans le FR 2 159 580.

Enfin l'on peut ne pas provoquer d'arrêt et réaliser une addition simultanée d'une solution de silicate alcalin et d'une solution d'acide dans une solution de silicate comme, par exemple, dans le FR 1 352 354.

Bien évidemment, il existe de nombreuses variantes possibles de ces procédés qui permettent de contrôler les caractéristiques des silices, et la précédente énumération n'est pas du tout limitative du type de silice que l'on peut mettre en œuvre dans le cadre de la présente invention.

Mais la présente invention sera plus aisément comprise à l'aide des exemples suivants donnés à titre illustratif mais nullement limitatifs.

On a mis en œuvre divers succinimides résumés au tableau I, obtenus à partir de diverses amines et de deux anhydrides:

- l'anhydride (tétrapropényl-succinique (anhydride I)
- l'anhydride de polyisobutényl-succinique (anhydride II).

Les divers succinimides ont été obtenus de la manière suivante:

Succinimide I

Dans un ballon tricol de 5 litres équipé d'un agitateur mécanique d'une ampoule à brome, d'un Dean-Starck pour éliminer l'eau de réaction, on introduit 832 g de tris(oxa-3) amino-6, hexyl) amine (2,6 mol) et 500 ml de xylène. Le mélange est chauffé à reflus puis on ajoute en 2 h, 2075 g d'anhydre tétrapropényl-succinique (7,8 mol) dissous dans 350 ml de xylène. Après 4 h de réaction, toute l'eau de la réaction a été éliminée. On évapore alors du xylène sous pression réduite 27,6 mbar (20 mm Hg).

Dosage:

taux d'azote = 5,21%
théorie = 5,26%
indice d'acide résiduel = 6,2 mg KOH/g.

Succinimide 2

Avec l'appareillage décrit dans l'exemple 1, on effectue la réaction suivante:

On introduit 845 g de diamino-1-10 dioxa 4,7 décane (4,8 mol) et 250 ml de xylène. Le mélange est chauffé à reflux (du xylène) puis on ajoute en 2 h, 1,596 g d'anhydride tétrapropényl-succinique (6 mol) dissous dans 600 ml de xylène. Après 5 h de chauffage à 150 °C toute l'eau de la réaction est éliminée. On évapore alors le xylène sous une pression d'environ 50 mbar (30 mm Hg). Le produit obtenu est filtré sur clarcel.

Dosage:
azote = 5,72%
théorie = 5,75%
Indice d'acide résiduel = 3,25.

Succinimide 3

Avec le même appareillage que décrit à l'exemple 1, on introduit 336 g d'éthylène diamine (5,6 mol) et 200 ml de xylène. Le mélange est chauffé à reflux du xylène puis on ajoute en 1 h 30, 1862 g d'anhydride tétrapropényl-succinique (5,6 mol) dissous dans 600 ml de xylène.

On continue à chauffer jusqu'à ce que toute l'eau de la réaction soit éliminée ainsi que le xylène.

Le produit obtenu qui est légèrement trouble est filtré sur clarcel à 120°C.

Dosage:
azote = 6,5%
théorie = 7,5%
Indice d'acide résiduel = 1,3.

Succinimide 4

Avec l'appareillage décrit dans l'exemple 1, on effectue la réaction suivante:

On introduit 605 g de para diamino benzène (5,6 mol) et 100 ml de xylène. On chauffe à reflus du xylène puis on ajoute 862 g d'anhydride tétrapropényl-succinique (7 mol) dissous dans 600 ml de xylène en 1 h 30. Après 4 h de réaction toute l'eau de la réaction est éliminée. On évapore le xylène sous une pression d'environ 50 mbar (30 mm Hg).

Le produit obtenu est solide à froid et de couleur rouge.

Dosage:
azote = 6,5%
théorie = 6,69%
Indice d'acide résiduel = 6,85.

Succinimide 5

Avec l'appareillage décrit dans l'exemple 2, on effectue la réaction suivante:

On introduit 942 g de bis hexaméthylène triamine et 400 ml de xylène. Le mélange est chauffé à reflus du xylène puis on ajoute en 1 h 30, 1490 g d'anhydride tétrapropényl-succinique dissous dans 400 ml de xylène. Après 4 h à 150 °C, toute l'eau de la réaction a été éliminée. On évapore le xylène sous pression réduite de 20,4 mbar (15 mm Hg).

Dosage:
azote total = 7,1%
théorie = 7,3%
Indice d'acide résiduel = 3,87 mg KOH/g.

Succinimide 6

Dans un ballon tricol de 2 litres équipé d'un agitateur mécanique, d'une ampoule à brome, d'un thermomètre et d'une tête de distillation suivie d'un condenseur et d'un récepteur, on verse 665 g d'anhydride tétrapropényl-succinique (soit 2,5 mol) que l'on chauffe à 130 °C.

On introduit alors en 30 min 189 g de tétraéthylène pentamine (soit 2 mol). Le mélange est porté à 160°C sous 34 mbar (25 mm Hg) de pression. Lorsque toute l'eau formée au cours de la réaction a distillé (3 heures) le mélange est refroidi.

L'analyse d'azote est la suivante:
théorie = 14%
mesuré = 13,8%.

Par analyse infrarouge on remarque que toutes les fonctions anhydride succinique ont réagi et on note la présence des bandes caractéristiques du groupement succinimide.

Succinimide 7

Il s'agit d'un produit commercial correspondant au mono (polyisobuténvl-succinimide) dérivé de la tétraéthylène pentamine et d'une anhydride polyisobutényl-succinimide d'indice d'acide 74 obtenu par condensation de l'anhydride maléique et d'un polyisobutène de masse moléculaire voisine de 1000.

Tableau 1

| Succinimide | Amine | Anhydride | Rapport molaire amine/anhydride | Azote mesure % | total théorie % | Indice d'acide résiduel | Aspect des produits |
|---|---|---|---|---|---|---|---|
| 1 | $N(CH_2-CH_2-O-(CH_2)_3-NH_2)_3$ | I | 1,1 | 8,6 | 8,9 | 2,2 | liquide fluide peu coloré |
| 2 | $NH_2-(CH_2)_3-O-(CH_2)-O-C_2)_3-NH_2$ | I | 0,8 | 6,5 | 7,6 | 1,3 | liquide visqueux coloré |
| 3 | $NH_2-CH_2-CH_2-NH_2$ | I | 0,8 | 5,72 | 5,75 | 3,25 | liquide visqueux coloré |
| 4 | 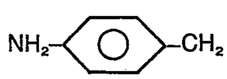 | I | 0,8 | 6,5 | 6,7 | 7 | solide rouge |

Tableau 1 (Fortsetzung)

| Succinimide | Amine | Anhydride | Rapport molaire amine/anhydride | Azote mesure % | total théorie % | Indice d'acide résiduel | Aspect des produits |
|---|---|---|---|---|---|---|---|
| 5 | $NH_2-(CH_2)_6-NH-(CH_2)_6-NH_2$ | I | 0,8 | 7,2 | 7,3 | 4 | liquide visqueux très coloré |
| 6 | tétra éthylène pentamine | I | 0,8 | 13,1 | 14 | | liquide visqueux coloré |
| 7 | tétra éthylène pentamine | II | | | | | |

Exemple 1

Dans une première série d'essais l'on a mis en évidence l'influence du succinimide selon l'invention sur l'amélioration de la compatibilité 1 huile-charge avec la même huile et la même charge.

Pour mettre en évidence cette amélioration on a fait appel à la méthode dite du «point de mouillage PM et du point de coulage PC» selon Patton dans «Point flow and Pigment Dispersion» – Interscience Publishers John Wiley and Sons – New York 1964.

Selon cette méthode, pour déterminer le point de mouillage PM, on ajoute goutte à goutte de l'huile à une quantité connue de charge, l'huile chasse progressivement l'air, et le mélange charge-huile donne une pâte avec laquelle on forme un petit cylindre qui roule sous la spatule sans se briser ni adhérer au support (voir figs 1, 2, 3).

On exprime les résultats en ml d'huile par 100 g de charge.

Lorsqu'on a ainsi déterminé le point de mouillage, on poursuit l'addition d'huile jusqu'à ce que le mélange huile-charge soit suffisamment fluide pour s'écouler librement sur un plan incliné à 45°. On exprime les résultats en $cm^3$ d'huile par 100 g de charge et l'on fait la différence $\Delta$(PC-PM) entre le point de coulage et le point de mouillage. L'affinité est d'autant meilleure que ce $\Delta$(PC-PM) est plus faible.

L'huile est constituée par une huile Dutrex 729 FC dont la densité à 15°–14 °C, selon ASTM D 1298, est égale à 1,05.

Les autres caractéristiques sont:

viscosité cinématique

20 °C cs selon ASTM D 445 8440

50 °C cs selon ASTM D 445 268

La silice est une silice de précipitation, commercialisée par la demanderesse sous la dénomination Zeosil® 45 dont les caractéristiques principales sont les suivantes:

- perte au feu à 900 °C — 12,5 au max.
- pH (5 g/100 ml) — 6,5 ± 0,3
- surface BET — 200 $m^2/g$
- diamètre des particules ultimes — 20 nm
- prise d'huile DOP (dioctyl phtalate — au moins 300 ml/100 g
- particules collectées au tamis selon ASTM 80 — < 5%.

Les résultats obtenus en testant les sept additifs selon l'invention sont représentés à la fig. 4 concernant les points de coulage.

L'on remarque que ceux-ci sont notablement abaissés. Etant donné que les points de mouillage sont pratiquement les mêmes c'est-à-dire voisin de 314 la figure donne une représentation très significative de l'amélioration obtenue.

Exemple 2

Dans une seconde série d'essais l'on a alors comparé l'action des deux succinimides 6 et 7 comparativement à divers additifs connus. Les résultats sont exprimés au tableau 2 et représentés à la fig. 5 (sur laquelle ne figure que le succinimide 6, les produits étant classés de la gauche vers la droite en commençant par la référence).

Tableau 2

Silice (Z. 45) – huile dutrex 729 FC

| Additifs | Référence huile seule | huile + butylglycol | | huile + silicone | | huile + méthanolamine | | huile + mercapto silane | | huile + NP 6 | |
|---|---|---|---|---|---|---|---|---|---|---|---|
| % dans l'huile | – | 2 | 5 | 2 | 5 | 2 | 5 | 2 | 5 | 2 | 5 |
| P de M | 315 | – | 308 | 306 | 300 | 316 | 314 | 312 | 311 | 308 | 304 |
| P de C | 592 | – | 572 | 560 | 546 | 594 | 590 | 600 | 600 | 560 | 550 |
| $\Delta$ PC-PM | 277 | – | 264 | 254 | 246 | 278 | 276 | 288 | 289 | 252 | 246 |

| Additif | huile + Cemulsol NP 2 | | huile + Cemulsol NP 9 | | huile + Cemulsol FM33 | | huile + Pluronic L 61 | | huile + Tetronic 704 | | huile + additif 6 | | huile + additif 7 | |
|---|---|---|---|---|---|---|---|---|---|---|---|---|---|---|
| % dans l'huile | 2 | 5 | 2 | 5 | 2 | 5 | 2 | 5 | 2 | 5 | 2 | 5 | 2 | 5 |
| P de M | 300 | 296 | 314 | 316 | 316 | 318 | 314 | 314 | 308 | 306 | 314 | 316 | 314 | 314 |
| P de C | 566 | 570 | 566 | 558 | 560 | 548 | 572 | 564 | 540 | 522 | 398 | 396 | 380 | 380 |
| Δ PC-PM | 266 | 274 | 252 | 242 | 244 | 230 | 258 | 250 | 232 | 216 | 84 | 80 | 66 | 66 |

NP = nonyl phénol à 2 OE, 9 OE, FM alcool ethoxyle propylène, base $C_{12}$ – Pluronic L61: condensat mixte oxyde d'éthylène/oxyde de propylène 10% oxyde d'éthylène – 90% oxyde de propylène – PM moyen de l'oxyde propylène 1750. Tétronic 704 condensation d'oxyde d'éthylène et d'oxyde de propylène sur l'éthylène – di amine.

Exemple 3

Dans le tableau 3 ci-après, en partant toujours de la même charge, de la même huile, et de l'additif 6 on a étudié l'influence du taux d'additif par rapport à l'huile.

L'on voit que des résultats très significatifs sont obtenus dès que l'on ajoute 1% d'additif. Ces résultats sont également visibles sur la fig. 4.

Tableau 3

| Additif | Référence huile seule | Huile + additif 1 | | | | | |
|---|---|---|---|---|---|---|---|
| % dans l'huile | 0 | 0,1 | 0,2 | 0,5 | 1,0 | 2,0 | 5,0 |
| P de M | 315 | 314 | 316 | 314 | 315 | 314 | 316 |
| P de C | 592 | 540 | 492 | 448 | 404 | 398 | 396 |
| Δ PC-PM | 277 | 226 | 176 | 134 | 89 | 84 | 80 |

Exemple 4

Toujours en utilisant la même huile et le même additif, on a mis en œuvre deux autres charges. Tout d'abord une silice micronisée, commercialisée sous le nom de Tixosil® 33J. Celle-ci présente la même surface BET et une taille des particules ultimes identique à la précédente, mais sa prise DOP est élevée 400 ml/100 g.

Puis un silico-aluminate amorphe obtenu par précipitation de composition chimique en poids (Zeolex® 25)

| | |
|---|---|
| $SiO_2$ | 80,2 |
| $Al_2O_3$ | 9,3 |
| $Na_2O$ | 5,7 |
| eau combinée | 4,8 |

de caractéristiques suivantes:

| | |
|---|---|
| – perte au feu (900 °C) | 12 au max. |
| – pH (5 g/100 ml) | 9,8 ± 0,2 |
| – surface BET | 160 m²/g |
| – diamètre des particules ultimes | 20 nm |
| – prise d'huile (DOP) au moins | 230 ml/100 g |
| – particules recueillies dans un tamis selon ASTM 325 | 5% |

Le tableau 4 suivant donne les résultats obtenus avec toujours le même additif 6.

Tableau 4

| Charge | Additif % | PM | PC | Δ PC-PM | R = PC/PM |
|---|---|---|---|---|---|
| | 0 | 210 | 590 | 380 | 2,8 |
| Zeolex R25 | 1 | 192 | 270 | 78 | 1,40 |
| | 2 | 186 | 260 | 74 | 1,40 |
| | 0 | 398 | 1256 | 858 | 3,15 |
| Tixosil | 1 | 404 | 694 | 290 | 1,71 |
| R33 J | 2 | 402 | 608 | 206 | 1,51 |
| | 5,0 | 406 | 572 | 166 | 1,40 |

Ces résultats corroborent donc les résultats précédents.

Exemple 5

Dans cet exemple on a repris la même silice qu'au départ (Zeosil® 45), le même additif que précédemment (additif 6) mais on a changé la nature du plastifiant en faisant appel à du dioctylphtalate (DOP) et à un alkylbenzène (Progiline® 151).

Le tableau 5 résume ci-après les résultats obtenus.

Tableau 5

| Huile | Additif % | PM | PC | Δ | R* = PC/PM |
|---|---|---|---|---|---|
| DOP | 0 | 328 | 646 | 318 | 1,97 |
| | 2 | 324 | 386 | 62 | 1,19 |
| Alkyl- | 0 | 332 | 696 | 362 | 2,09 |
| benzène | 2 | 336 | 470 | 134 | 1,40 |

Cet exemple montre donc que l'on peut faire appel à divers huiles et plastifiants, et que l'effet est conservé
* Plus R est proche de 1, plus l'amélioration est nette.

Exemple 6

En reprenant les mêmes plastifiants qu'à l'exemple 5 à savoir le dioctylphtalate et l'alkylbenzène, dans les mêmes proportions et avec le même additif 6, mais en faisant appel à deux charges complètement différentes, d'abord une argile kaolinique blanche commercialisée sous la dénomination Argilec B 24 de caractéristiques suivantes:

Caractéristiques physiques
1 – Granulométrie
Répartition des particules selon diamètre:

| | |
|---|---|
| – au-dessus de 20 µm | 0 |
| – entre 20 et 15 µm | 2% |
| – entre 15 et 9 µm | 1% |
| – entre 9 et 4,5 µm | 8% |
| – entre 4,5 et 2 µm | 11,5% |
| – entre 2 et 1 µm | 8,5% |
| – au-dessous de 1 µm | 69% |

2 – Densité apparente

| | |
|---|---|
| – non tassé | 0,326 |
| – tassé | 0,460 |

3 – Humidité
– inférieure à 0,5% à l'ensachage;
– équilibre après reprise normale; environ 1%

4 – pH
– entre 5 et 6

Analyse chimique

| | |
|---|---|
| – perte au feu | 12,97 |
| – silice (dont silice libre 1,50%) | 45,91 |
| – anhydride titanique | 1,39 |
| – alumine | 37,04 |
| – sesquioxyde de fer | 1,58 |
| – chaux | 0,41 |
| – magnésie | traces |
| – oxyde de sodium, oxyde de potassium | 0,89 |
| – plomb | 0,00 |
| – cuivre | 0,00 |
| – manganèse en MnO | 0,003 |
| Total | 100,193 |

Nota

Le pourcentage moyen de 1,50 de silice libre, se présente pour la plus grande partie, sous la forme colloïdale, donc non abrasive.

Ensuite un blanc de craie de champagne ayant subi un broyage et une sélection poussée, traité en surface, commercialisé sous le nom de OMYA BJH.

Composition chimique avant traitement

| | |
|---|---|
| – CaCO3 | 98,5 à 98,7% |
| – insoluble HC1 | 0,09% |
| – silice (SiO2) | 0,08% |
| – $Fe_2O_3$ | 0,20% |
| – $Al_2O_3$ | 0,15% |
| – MgO | Traces |
| – Mn maximum | 0,02% |
| – humidité maximum | 0,10% |
| – SO4–– | 0,15% |

Caractéristiques physiques et physico-chimiques
Finesse:

| | |
|---|---|
| – passant au tamis 325 | 99,99% |
| – % de particules de diamètre inférieur à 10 µm | 99,9 |
| – % de particules de diamètre inférieur à 5 µm | 85 à 87 |
| – % de particules de diamètre inférieur à 3 µm | 65 à 68 |

– diamètre statistique moyen des particules 1 à 3 µm

Forme de particules: fragments de coccolithes.
Poids spécifique: 2,7
Densité apparente à volume minimum: 1,1
Indice de réfraction: 1,5
Blancheur à sec:
(filtre vert Tristimulus): 84,5 ± 1 (MgO = 100).
Pouvoir opacifiant: important
Absorption de DOP:
18 à 19 g pour 100 g poudre.

Le tableau 6 ci-après donne les résultats obtenus.

Tableau 6

| | Huile | % addi. | PM | PC | Δ PC/PM | R = PC/PM |
|---|---|---|---|---|---|---|
| Kaolin | DOP | 0 | 70 | 150 | 80 | 2,14 |
| | | 2 | 70 | 140 | 70 | 2,00 |
| | Alkyl-benzène | 0 | 70 | 160 | 90 | 2,29 |
| | | 2 | 70 | 145 | 75 | 2,07 |
| Craie | DOP | 0 | 40 | 80 | 40 | 2,00 |
| | | 2 | 40 | 75 | 35 | 1,88 |
| | Alkyl-benzène | 0 | 45 | 85 | 40 | 1,89 |
| | | 2 | 45 | 75 | 30 | 1,67 |

On note encore une amélioration sensible de la compatibilité huile-charge grâce à l'additif selon l'invention.

On a réalisé également des essais en mélange caoutchouc. Dans ces essais l'on a réalisé les tests suivants:

Tests mécaniques statiques et dynamiques

1 – Rhéomètre Monsanto (ASTM D 2084)

Mesure les propriétés rhéologiques du mélange durant la vulcanisation.

– Couple minimal (Cm): consistance du mélange non vulcanisé (mélange «cru») à la température de l'essai.

– Couple maximal (CM): consistance du mélange après réticulation.

Δ Couple: CM–Cm est en relation avec le taux de réticulation.

– Précocité: temps nécessaire pour démarrer la réticulation à la température de l'essai.

– Indice: en relation avec la vitesse de vulcanisation (temps optimum – Précocité).

$$\text{– Temps optimum : } X = \frac{(CM-Cm) \times 90}{100} + Cm$$

Couple X (ordonnée) Y minutes (abscisse)

Y mn = temps optimum.

Ces propriétés sont en particulier décrites dans l'Encyclopedia of Polymer Science and Technology volume 12 p. 265. (Interscience Publishers – John Wiley & Sons – Inc).

2 – Propriétés statiques

Sont celles qui sont mesurées selon les normes.

a) ASTM D 412-51 T
Résistance rupture MPa
Allongement %
Module MPa

b) ASTM D 2240-75
Dureté Shore A

c) NF T 47-126
Déchirement pantalon

d) DIN 53516
Abrasion (résistance à 1')

3 – Propriétés dynamiques
ASTM D 623-67
Flexomètre Goodrich

Cet appareil permet de soumettre un vulcanisat à des déformations alternées et de déterminer sa tenue à la fatigue.

a) Compression statique (CS %): déflexion sous charge constante.

b) Déformation permanente (DP %): pourcentage de déformation résiduaire après essai.

c) Compression dynamique (CD %): % de déformation durant l'essai.

CDO: Compression dynamique en début d'essai.

CDF: Compression dynamique en fin d'essai.

ΔCD = CDF–CDO évolution de la compression dynamique; est en relation avec la tenue à la fatigue.

d) ΔT base: ΔT; entre la température à la surface de l'éprouvette (à sa base) et la température de la chambre.

e) ΔT cœur: ΔT; entre la température au cœur de l'éprouvette et la température de la chambre.

f) Conditions des essais:
Charge 106 N, déflexion 22,2%, fréquence 21,4 Hz,
Température de la chambre = 50 °C.

Exemple 7

Dans cet exemple la charge utilisée est constituée par une silice type Zeosil 45 et le succinimide répond à la définition N° 6.

La formule mise en œuvre est la suivante:

| | |
|---|---|
| Copolymère butadiène styrène étendu aux huiles + (SBR 1712) | 60,00 |
| Polybutadiène (BR 1220) | 40,00 |
| Silice | 60,00 |
| Huile aromatique (Dutrex® 729 F-C) | 20,00 |
| Oxyde de zinc | 4,00 |
| Acide stéarique | 1,50 |
| N-isopropyl-N-phényl-para-phénylène-diamine (antioxygène PERMANAX® IPPD) | 1,50 |
| N-(diméthyl 1–3 butyl)-N'-phényl-p-Phénylènediamine (antioxygène PERMANAX® 6 PPD) | 1,5 |
| Polyéthylène glycol (PEG 4000) | 3,00 |
| N-cyclohexyl-2-benzothiazyl sulfenamide (Vulcafor® CBS) | 3,00 |
| succinimide selon les essais (voir tableau 2) soufre | 2,8 |

La mise en œuvre est réalisée dans un malaxeur interne BANBURY de 1 litre puis repris dans un malaxeur à cylindre.

Dans le tableau 7 ci-après on a résumé les résultats.

On constate en particulier que le couple minimum chute en fonction de la teneur en succinimide ce qui correspond à une diminution de la viscosité, sans modification notable des autres caractéristiques, on note aussi un effet favorable sur le module qui augmente, l'échauffement qui diminue (ΔT cœur) et la déformation permanente qui décroît.

Tableau 7

| Succinimide (% sur silice) | 0 | | 1 | | 2 | | 3 | | 4 | |
|---|---|---|---|---|---|---|---|---|---|---|
| Rhéomètre à 150°C Couple: Mini Maxi | 18,5–94,0 | | 19–97 | | 17,5–94 | | 15–93 | | 11–88,5 | |
| Δ Couples | 75,5 | | 78 | | 76,5 | | 78 | | 77,5 | |
| Précocité – Indice | 9 min 30 s–3 min 15 s | | 10 min–4 min 15 s | | 9 min 30 s–4 min | | 8 min–5 min | | 6 min 30 s–6 min | |
| Optimum | 12 min 45 s | | 14 min 15 s | | 13 min 30 s | | 13 min | | 12 min 30 s | |
| Propriétés statiques | | σ | | σ | | σ | | σ | | σ |
| Résistance rupture MPa | 9,62 | 0,58 | 8,18 | 0,45 | 8,98 | 0,37 | 7,9 | 0,46 | 8,45 | 0,48 |
| Dureté Shore A | 67 | – | 66 | – | 65 | – | 66 | – | 66 | – |
| Module à 100% A11.MPa | 1,53 | 0,08 | 1,7 | 0,14 | 1,7 | 0,1 | 1,7 | 0,06 | 1,8 | 0,11 |
| Module à 300% A11.MPa | 3,73 | 0,12 | 4,55 | 0,27 | 4,55 | 0,13 | 4,65 | 0,08 | 4,8 | 0,36 |
| Allongement % | 567 | 23 | 440 | 26,5 | 456 | 32 | 435 | 15 | 380 | 23 |
| Abrasion DIN (pertes) | 168 | – | 169 | – | 169 | – | 170 | – | 166 | – |
| Flexomètre Goodrich | | | | | | | | | | |
| Compression statique % (CS) | 11 | | 11 | | 10,9 | | 10,4 | | 12,3 | |
| Compression dynamique (CDO) % origine | 8 | | 5,5 | | 5,95 | | 5,55 | | 7,4 | |
| Compression dynamique (CDF) % finale | 9,8 | | 7,3 | | 8,25 | | 7,15 | | 9,2 | |
| Δ CDF – CDO | 1,8 | | 1,8 | | 2,30 | | 1,55 | | 1,80 | |
| Δ T. base °C | 27 | | 26 | | 27,5 | | 27,0 | | 27,0 | |
| Δ T. cœur °C | 105 | | 97,5 | | 104,5 | | 102,5 | | 100,0 | |
| Déformation permanente % | 5,05 | | 4,05 | | 4,35 | | 3,7 | | 3,5 | |

σ = écart type

Exemple 8

Dans cet exemple en mettant en œuvre toujours la même silice et la même huile et le même additif l'on fait appel à un caoutchouc naturel.

La formule utilisée est la suivante en parties, en poids:

| | |
|---|---|
| Caoutchouc naturel SMR 5 | 100,00 |
| Acide stéarique | 1,50 |
| Oxyde de zinc | 4,00 |
| Antioxygène (PERMANAX® 6 PPD) | 1,5 |
| (PERMANAX® I PPD) | 1,5 |
| Vulcafor CBS | 1,80 |
| Huile DUTREX® 729 FC | 20,00 |
| Silice | 60,00 |
| Polyéthylène glycol (PEG 4000) | 3,00 |
| Soufre | 2,80 |
| Succinimide | selon tableau 8 |

La mise en œuvre est faite de la même façon qu'à l'exemple 7.

Tableau 8

| Additifs (% sur silice) | 0,0 | | 2,0 | | 4,0 | | 6,0 | |
|---|---|---|---|---|---|---|---|---|
| Rhéomètre à 150 °C | | | | | | | | |
| Couple: Mini | | | | | | | | |
| Maxi | 24–91 | | 21–85 | | 16–83 | | 11–76 | |
| Couples | 67 | | 64 | | 67 | | 65 | |
| Précocité | 7 min 45 s–9 min 30 s | | 7 min–8 min 30 s | | 4 min 45 s–8 min 30 s | | 4 min 45 s–8 min 30 s | |
| Temps Optimum | 17 min 15 s | | 15 min 30 s | | 13 min 15 s | | 13 min | |
| Propriétés statiques | | σ | | σ | | σ | | σ |
| Résistance rupture MPa | 20,5 | 1,3 | 20,7 | 1,16 | 20,9 | 0,93 | 20,7 | 0,67 |
| Dureté Shore A | 72 | | 68 | | 68 | | 67 | |
| Module à 100% A11.MPa | 1,4 | 0,03 | 1,5 | 0,13 | 1,45 | 0,08 | 1,4 | 0,15 |
| Module à 300% A11.MPa | 3,1 | 0,14 | 3,5 | 0,16 | 3,4 | 0,29 | 3,1 | 0,38 |
| Allongement % | 728 | 20,5 | 715 | 16,5 | 722 | 32 | 734 | 37 |
| Déchirement $kNm^{-1}$ pantalon | 36,2 | 2,2 | 35,0 | 1,8 | 35,9 | 4,1 | 35,5 | 3,5 |
| Abrasion DIN (pertes) | 232 | | 235 | | 229 | | 251 | |
| Flexomètre Goodrich | | | | | | | | |
| C-24 1bs D-22, 2%, F-21, 4 Hz σ–50 °C | | | | | | | | |
| Compression statique % | 10,0 | | 10,3 | | 10,2 | | 11,9 | |
| Compression Dynamique % origine | 14,1 | | 11,3 | | 11,0 | | 11,2 | |
| Compression Dynamique % fin | 39,4 | | 28,4 | | 21,5 | | 20,7 | |
| Δ CDF-CDO | 25,3 | | 17,1 | | 10,5 | | 9,5 | |
| Δ T. base | 73 | | 45 | | 33,5 | | 27,0 | |
| Δ T. cœur | 150 | | 128 | | 105 | | 94,0 | |
| Déformation permanente % | 33,1 | | 18,0 | | 11,87 | | 10,3 | |

On voit que le couple minimal décroît de façon importante de 24 à 11.
On doit noter aussi l'effet très positif sur la diminution de l'échauffement à cœur.

Tableau 9

| Succinimides | 0 | 0,2 | 0,5 | 1,0 | 2,0 |
|---|---|---|---|---|---|
| Résistance rupture MPa | 9,8 | 11,8 | 11,3 | 12,3 | 13,0 |
| Dureté Shore A | 68 | 67 | 68 | 68 | 67 |
| Module 300% MPa | 2,1 | 1,5 | 1,4 | 1,6 | 1,4 |
| Allongement % | 1020 | 1230 | 1280 | 1350 | 1340 |
| Etat de surface | médiocre | médiocre | médiocre | moyen | bon |
| Coloration | jaune clair | jaune clair | jaune clair | jaune clair | jaune clair |
| Résistance au déchirement $kNm^{-1}$ éprouvette pantalon | 11 | 21,5 | 18,5 | 20,5 | 19 |

Exemple 9

Enfin on fait un essai de mise en œuvre par injection toujours avec la même huile, la même silice, le même succinimide de formule suivante avec un caoutchouc thermoplastique non vulcanisé:

| | |
|---|---|
| Caoutchouc Butadiène styrène 70/30 renfermant 30% de polystyrène bloc (Solprène® TR 411) | 50,0 |
| Elastomère thermoplastique de butadiène styrène répondant à la formule générale simplifiée SSS-BBBB-SSS (Careflex® IR-4122) | 50 |
| Silice | 5,0 |
| Huile | 20,00 |
| Anti-UV | 0,2 |
| Antioxygène | 0,2 |
| Succinimide selon l'invention | 0; 0,2; 0,5; 1,0; 2,0 |

La mise en œuvre est la suivante:

Les mélanges préparés au malaxeur interne de laboratoire (1 litre) sont injectés dans les conditions suivantes:

| | |
|---|---|
| Température alimentation | 155 °C |
| Température | 160 °C |
| Température | 165 °C |
| Moule 100 × 100 × 4 | 165 °C. |

Les résultats obtenus sont résumés dans le tableau 9 ci-après.

On constate qu'en présence de succinimide selon l'invention, la résistance à la rupture s'améliore progressivement en fonction du taux d'additif.

La résistance au déchirement fait un bond spéctaculaire en passant de 11 à 20 $kNm^{-1}$, quel que soit le taux d'additif.

L'état de surface s'améliore progressivement.

Après plusieurs semaines de stockage, l'on n'a pas observé d'exsudation et la teinte reste claire et stable.

Les exemples précédents qui sont représentatifs des divers facteurs montrent clairement l'intérêt de la présente invention.

Exemple 10

Cet exemple a pour but de vérifier que le succinimide placé sur support silice a le même comportement en mélange caoutchouc que le produit pur.

Formule

| | |
|---|---|
| Naturel SMR 5 L | 100,00 |
| Acide stéarique | 1,50 |
| ZnO | 4,00 |
| Antioxygène IPPD | 1,50 |
| Antioxygène 6PPD | 1,50 |
| Vulcafor® CBS | 1,50 |
| Huile DUTREX® | 20,00 |
| Silice précipitée de surface BET = 172 $m^2$/f | 60,00 |
| PEG 4000 | 3,00 |
| Soufre | 2,80 |
| Succinimide | Voir tableaux 10 et 11. |

Tableau 10

| | Banbury – simple malaxage | | Banbury – double malaxage | |
|---|---|---|---|---|
| Succinimide % exprimé en produit actif | 0,0 | 4,0 (1) | 0,0 | 4,0 (1) |
| Rhéomètre Monsanto à 150 °C | | | | |
| Couple minimal | 24,0 | 15,5 | 21,5 | 12,5 |
| Couple maximal | 81,0 | 75,0 | 82,0 | 69,5 |
| Δ Couple | 57,0 | 59,5 | 60,5 | 57,0 |
| Précocité = T + 2 | 8,0 | 4,75 | 9,25 | 5,75 |
| Indice = T.90 – (T + 2) | 11,5 | 9,75 | 10,50 | 9,50 |
| Optimum = T.90 | 19,5 | 14,5 | 19,75 | 15,25 |
| Résistance rupture M.Pa | 20,1 | 21,4 | 19,6 | 19,6 |
| Dureté Shore A | 66 | 62 | 64 | 62 |
| Module 100% M.Pa | 1,5 | 1,7 | 1,4 | 1,5 |
| Module 300% M.Pa | 3,5 | 4,0 | 3,7 | 3,9 |
| Allongement % | 672 | 684 | 687 | 642 |
| Déchirement pantalon $kNm^{-1}$ | 52 | 65 | 61 | 68 |
| Abrasion DIN | 285 | 276 | 300 | 305 |

(1) – 4% en produit actif soit 6% en produit sur support silice.

Tableau 11

| | Banbury – simple malaxage | | Banbury – double malaxage | |
|---|---|---|---|---|
| Succinimide % exprimé en produit actif | 0,0 | 4,0 (1) | 0,0 | 4,0 (1) |
| Propriétés dynamiques | | | | |
| Essai au Flexomètre Goodrich | | | | |
| Compression statique % | 13,3 | 12,2 | 13,6 | 14,5 |
| Compression Dynamique Origine % (CDO) | 14,7 | 12,1 | 14,5 | 14,2 |
| Compression Dynamique finale % (CDF) | 40 | 25,7 | 40 | 26,1 |
| Δ CDF – CDO % | 25 | 13,6 | 25,5 | 11,9 |
| Echauffement | | | | |
| Δ T.base 0°C | > 60 | 34 | 53,5 | 30,5 |
| Δ T.Cœur 0°C | >150 | 107,5 | 130 | 93,5 |
| Déformation permanente % | 22,5 | 12,3 | 21,7 | 12,8 |

(1) cf tableau 10

Les exemples montrent que la composition permet:

– dans les SBR d'abaisser la viscosité (couple minimal) des mélanges crus sans modifier sensiblement les autres caractéristiques des vulcanisats.

– dans le caoutchouc naturel d'abaisser la viscosité (couple minimal) des mélanges crus et d'améliorer les caractéristiques mécaniques des vulcanisats, notamment la résistance au déchirement et les propriétés dynamiques: échauffement et hysterèse réduits.

– dans les caoutchoucs thermoplastiques d'améliorer la résistance au déchirement et l'état de surface.

## Revendications

1. Procédé pour améliorer la compatibilité des huiles du groupe des huiles d'hydrocarbures aromatiques, naphténiques ou paraffiniques et des charges dans les caoutchoucs, caractérisé par le fait que l'on met en œuvre des compositions à additifs à base d'alcényl-succinimides obtenus par condensation d'une polyamine sur un anhydride alcényl-succinique dont le radical alcényle contient de 3 à 100, de préférence de 3 à 80 atomes de carbone.

2. Procédé selon 1, caractérisé par le fait que les polyamines mises en œuvre sont du groupe des polyalkylèneamines dont les radicaux alkylènes, linéaires ou ramifiés, contiennent de 2 à 12 atomes de carbone, lesdites polyalkylèneamines étant éventuellement substituées sur l'azote par un ou plusieurs radicaux hydroxyalkyles ou aminoalkyles.

3. Procédé selon 1, caractérisé par le fait que les polyamines mises en œuvre sont du groupe des poly-phénylènes amines.

4. Procédé selon 1, caractérisé par le fait que les polyamines mises en œuvre sont du groupe des polyoxaalkylène amines dont les radicaux oxaalkylènes sont linéaires ou ramifiés et contiennent de 2 à 3 atomes de carbone.

5. Procédé selon l'une des revendications 1 à 4, caractérisé par le fait que l'anhydride alcénylsuccinique présente un radical alcényle qui dérive d'une monooléfine en $C_3$–$C_{30}$, d'un oligomère ou d'un polymère d'une monooléfine en $C_2$–$C_{30}$ ou d'un copolymère desdites oléfines entre elles ou avec des comonomères diéniques ou vinylaromatiques.

6. Procédé selon la revendication 5, caractérisé par le fait que l'anhydride alcénylsuccinique est dérivé d'oligomères ou de polymères de l'éthylène, du propylène, du butène-1, de l'isobutène, du cyclohexyl-3, butène-1, du méthyl-2 propyl-5 hexène-1.

7. Procédé selon l'une des revendications 1 à 6, caractérisé par le fait que la matière additionnée de charge est du groupe du caoutchouc naturel, du SBR, du caoutchouc nitrile, du polychloroprène, de l'EPDM.

8. Procédé selon l'une des revendications 1 à 7, caractérisé par le fait que l'on ajoute de 1 à 5% en poids de l'additif par rapport au plastifiant.

9. Procédé selon l'une des revendications 1 à 8, caractérisé par le fait que la charge est du groupe du carbonate de calcium, du kaolin, des silices et des silico-aluminates.

## Claims

1. A process for improving the compatibility of oils of the group comprising oils of aromatic, naphthenic or paraffinic hydrocarbons and fillers in rubbers characterised by using compositions with additives based on alkenyl-succinimides produced by condensation of a polyamine on an alkenyl-succinic anhydride wherein the alkenyl radical contains from 3 to 100 and preferably from 3 to 80 carbon atoms.

2. A process according to claim 1 characterised in that the polyamines used are from the group of polyalkylene amines wherein the straight or branched chain alkylene radicals contain from 2 to 12 carbon atoms, said polyalkyleneamines being optionally substituted on the nitrogen by one or more hydroxylalkyl or aminoalkyl radicals.

3. A process according to claim 1 characterised in that the polyamines used are from the group comprising polyphenyleneamines.

4. A process according to claim 1 characterised in that the polyamines used are from the group of polyoxaalkyleneamines wherein the oxaalkylene radicals are straight or branched chain and contain from 2 to 3 carbon atoms.

5. A process according to one of claims 1 to 4 characterised in that the alkenyl-succinic anhydride has an alkenyl radical which derives from a $C_3$–$C_{30}$ monoolefin, an oligomer or a polymer of a $C_2$–$C_{30}$ monoolefin or a copolymer of said olefins with each other or with dienic or vinylaromatic comonomers.

6. A process according to claim 5 characterised in that the alkenyl-succinic anhydride is derived from oligomers or polymers of ethylene, propylene, 1-butene, isobutene, 3-cyclohexal 1-butene, 2-methyl 5-propyl 1-hexene.

7. A process according to one of claims 1 to 6 characterised in that the material to which the filler is added is from the group comprising natural rubber, SBR, nitrile rubber, polychloroprene and EPDM.

8. A process according to one of claims 1 to 7 characterised by adding from 1 to 5% by weight of the additive, with respect to the plasticiser.

9. A process according to one of claims 1 to 8 characterised in that the filler is from the group comprising calcium carbonate, kaolin, silicas and silico-aluminates.

**Patentansprüche**

1. Verfahren zum Verbessern der Verträglichkeit der Öle aus der Gruppe der aromatischen, naphthenischen oder paraffinischen Kohlenwasserstofföle mit den Füllstoffen in den Kautschuken, dadurch gekennzeichnet, dass man Zusatzmittel auf der Basis von Alkenylbernsteinsäureimiden einsetzt, die durch Kondensation eines Polyamins mit einem Alkenylbernsteinsäureanhydrid, dessen Alkenylgruppe 3 bis 100, vorzugsweise 3 bis 80 Kohlenstoffatome enthält, erhalten worden sind.

2. Verfahren nach Anspruch 1, dadurch gekennzeichnet, dass die eingesetzten Polyamine zur Gruppe der Polyalkylenamine gehören, deren lineare oder verzweigte Alkylengruppen 2 bis 12 Kohlenstoffatome enthalten, wobei diese Polyalkylenamine gegebenenfalls am Stickstoffatom durch eine oder mehrere Hydroxyalkyl- oder Aminoalkylgruppen substituiert sind.

3. Verfahren nach Anspruch 1, dadurch gekennzeichnet, dass die eingesetzten Polyamine zur Gruppe der Polyphenylenamine gehören.

4. Verfahren nach Anspruch 1, dadurch gekennzeichnet, dass die eingesetzten Polyamine zur Gruppe der Polyoxaalkylenamine gehören, deren Oxaalkylengruppen linear oder verzweigt sind und 2 oder 3 Kohlenstoffatome enthalten.

5. Verfahren nach einem der Ansprüche 1 bis 4, dadurch gekennzeichnet, dass das Alkenylbernsteinsäureanhydrid eine Alkenylgruppe aufweist, die von einem $C_3$ bis $C_{30}$ Monoolefin, einem Oligomeren oder einem Polymeren eines $C_2$ bis $C_{30}$ Monoolefins oder von einem Copolymeren dieser Olefine untereinander oder mit einem Diencomonomeren oder einem vinylaromatischen Comonomeren abgeleitet ist.

6. Verfahren nach Anspruch 5, dadurch gekennzeichnet, dass das Alkenylbernsteinsäureanhydrid von Oligomeren oder Polymeren von Ethylen, Propylen, 1-Buten, Isobuten, 3-Cyclohexyl-1-buten oder 2-Methyl-5-propyl-1-hexen abgeleitet ist.

7. Verfahren nach einem der Ansprüche 1 bis 6, dadurch gekennzeichnet, dass das mit Füllstoff versetzte Material zur Gruppe Naturkautschuk, SBR-Kautschuk, Nitril-Kautschuk, Polychloropren und EPDM gehört.

8. Verfahren nach einem der Ansprüche 1 bis 7, dadurch gekennzeichnet, dass man, bezogen auf den Weichmacher, 1 bis 5 Gew.-% Additiv zusetzt.

9. Verfahren nach einem der Ansprüche 1 bis 8, dadurch gekennzeichnet, dass der Füllstoff zur Gruppe Calciumcarbonat, Kaolin, Kieselsäuren und Silicoaluminate gehört.

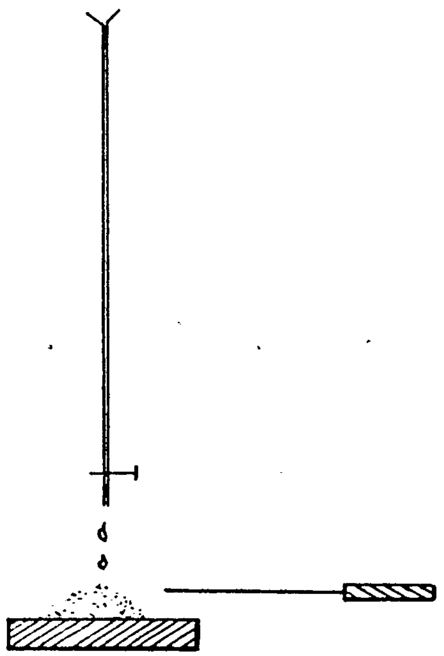

Fig.1

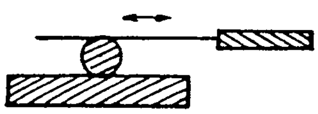

Fig.2

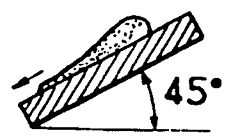


Fig.3

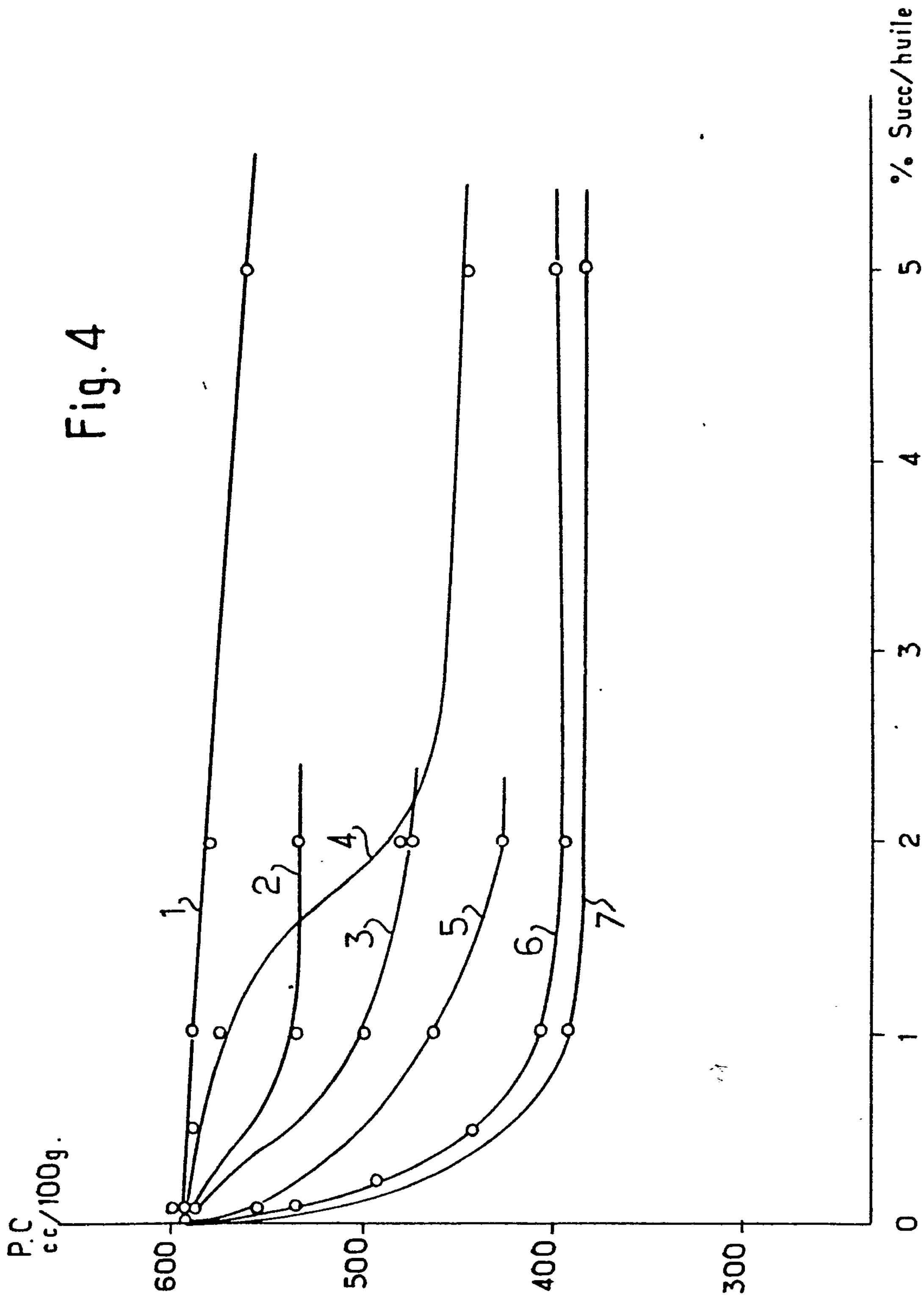


Fig. 4

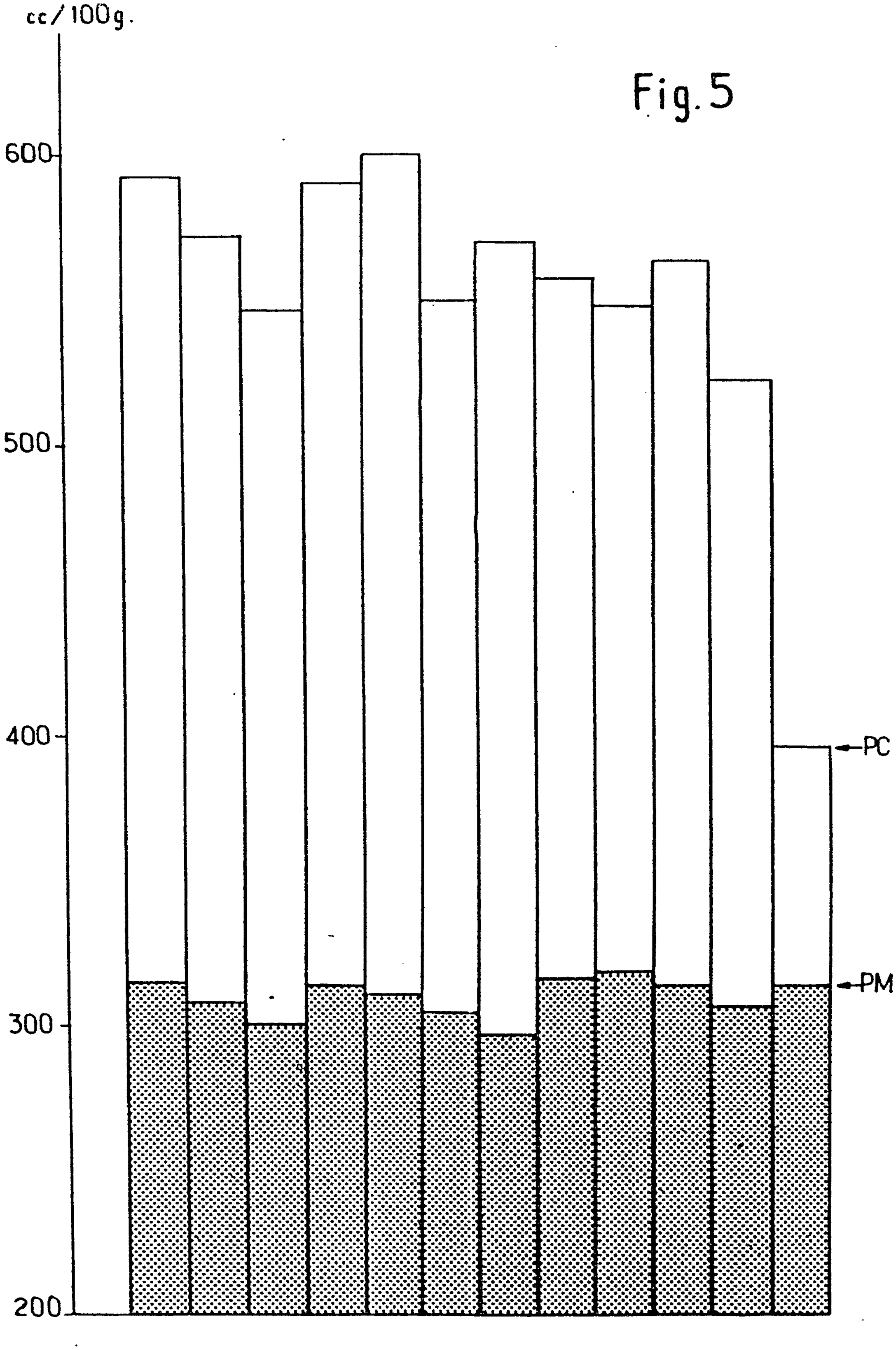


Fig. 5